# EUROPEAN PATENT SPECIFICATION

(11) **EP 1 551 675 B1**
(45) Date of publication and mention of the grant of the patent: **23.07.2008**
(21) Application number: 03733806.8
(22) Date of filing: 26.06.2003
(51) Int. Cl.: B60R 22/18

(54) **A SEAT-BELT BUCKLE ARRANGEMENT**
SITZGURTVERSCHLUSSANORDNUNG
DISPOSITIF DE BOUCLE DE CEINTURE DE SECURITE

(30) Priority: 19.07.2002 GB 0216900; 28.01.2003 GB 0301965
(43) Date of publication of application: 13.07.2005
(73) Proprietor: AUTOLIV DEVELOPMENT AB, 447 83 Vargarda (SE)
(72) Inventor: QUADRADA, Jané, Joaquim, E-08301 Mataro (ES); PUIGDEMONT, Victor Bustos, E-08028 Barcelona (ES); HOLTHUS, Veit, 38116 Braunschweig (DE); Bäker, Matthias, 22335 Hamburg (DE)
(74) Representative: Parry, Simon James
(86) International application number: PCT/SE2003/001111
(87) International publication number: WO 2004/009412

(56) References cited:
- EP-A1- 0 327 968
- DE-U1- 20 200 271
- US-A- 4 645 231
- US-A- 5 860 706

## Description

**THE PRESENT INVENTION** relates to a seat belt buckle assembly and more particularly relates to a seat belt buckle assembly for use as part of a seat belt arrangement in a motor vehicle such as a motor car.

A seat belt buckle must be located, within a motor vehicle, at a position where it may easily be found by an occupant of a vehicle attempting to fasten a safety belt in position, but the buckle should not be obtrusive.

Many seat belt buckle assemblies have been proposed previously, to be mounted in position within a motor vehicle. A typical buckle assembly incorporates an element extending from the buckle to an end piece or mounting plate, the end piece or mounting plate being provided with an aperture so that the end piece or mounting plate may be readily bolted to an anchor point provided within a motor vehicle. The seat-belt buckle is itself a component which is configured to receive releasably a tongue which is mounted on the seat-belt. Typically the seat-belt buckle receives the tongue through a slot or opening formed in the buckle, and when the tongue is inserted into the buckle, the tongue is automatically retained within the buckle. The tongue can be released from the buckle by depressing an appropriate actuating button.

There is, in some cases, a requirement for a very compact or small buckle assembly, especially where the buckle is to be positioned extremely close to the anchoring point. However when the buckle is intended for use with a safety-belt provided on a rear seat of a motor vehicle, the buckle must be spaced from the anchoring point.
Seat-belt buckles that are utilised on rear seats are often located at the point where the squab of the rear seat meets with the back-rest of the rear seat. The buckle should have an initial position in which the buckle is not obtrusive, especially if the rear seat is to accommodate three passengers, to enable the passenger who is to have the middle position to slide across the seat without any uncomfortable engagement with the seat-belt buckle. However, it is appropriate for the buckle to have a more protruding position when the buckle is in use.

EP0327968 discloses a genomic buckle stalk for a seat-belt system which is made self-supporting by a support member and which is embraced by a unitary cover formed integrally with webbing.

The present invention seeks to provide an improved buckle assembly.

According to one aspect of this invention there is provided seat belt buckle assembly, the assembly having: a webbing strap, an end piece defining a slot to receive the webbing strap and a buckle, the buckle having a slot to receive the webbing strap; the webbing strap having a first portion extending through the slot in the end piece and secured to the main part of the webbing strap and a second portion passing through the slot in the buckle and secured to the main part of the webbing strap, one said portion being stitched directly to the main part of the webbing strap and the other portion being stitched to the combination of said one portion and the main part of the strap, with stitching passing through the main part and the two portions of the strap.

The slot in the end piece and the slot in the buckle each have a width less than the width of the strap, portions of the strap being tucked in the region of each slot, the stitching connecting the said other portion to the combination of the first end portion and the main region of the strap extending only through three super-imposed layers of strap.

The stitching securing the said other portion to the combination of the first end portion and the main part of the strap is of rhombic form.

The buckle assembly may further comprise a connector, the connector having an elongate element and at least one mounting element connected to or formed integrally with the elongate element for pivotal movement relative to the elongate element, the or each mounting element being resiliently biased to a predetermined position relative to the elongate element, or each mounting element being mounted on the buckle, the said second portion of the strap passing around at least part of the connector, and where it is superimposed over the main part of the strap, being secured thereto so that the superimposed regions of the strap embrace the said elongate element.

Preferably, said resilient bias between the or each mounting element and the elongate element is effective to move the buckle to an initial position in which the axis of the buckle is substantially perpendicular to the axis of the elongate element.

Conveniently, said resilient bias is effected by at least one resilient biasing element.

Preferably the elongate element is formed of metal sheet, one end of the elongate element forming a loop which receives a rod which is pivotal relative to the elongate element, the rod extending to and being connected to arms which extend from part of the mounting element, the mounting element being constituted by a mounting plate, there being at least one resilient biasing element engaging the elongate element and a said arm to impart said bias to the mounting element.

Preferably the or each said resilient biasing element comprises a helical spring surrounding said rod.

Conveniently, said connector defines the slot present in the buckle.

In an alternative embodiment, the, or each, mounting element and the elongate element are each formed from a single length of bent resilient wire.

Preferably, the elongate element is defined by an elongate loop of said wire extending between a pair of hook-shaped formations, each said hook-shaped formation defining a respective mounting element for engagement with the buckle.

Conveniently, the region of said wire forming the elongate element, and the region of said wire forming the, or each, mounting element are joined by a, or a respective, helically wound region of said wire, the helically wound region of wire providing said resilient bias between the, or each, mounting element and the elongate element.

Advantageously, said second portion of the strap passes through an aperture in the buckle and around said the or each mounting element.

According to another aspect of this invention, there is provided a method of assembling a seat belt buckle assembly having a webbing strap, an end piece defining a slot to receive the webbing strap and a buckle defining a slot to receive the webbing strap; the method comprising the steps of: passing one end portion of the strap through the slot in the end piece; passing the other end portion of the strap through the slot in the buckle; securing a first end portion of the strap to the main part of the strap using stitching and subsequently securing the second end portion of the strap to the combination of the one end of the strap and the main piece of the strap using stitching, the stitching passing through the main part and the two portions of the strap.

The strap is wider than each of said slots, and the method comprises the steps of tucking in parts of the strap adjacent each slot and performing the first stitching in a region where there are only two super-imposed layers of strap and performing the second stitching in a region where there are three super-imposed layers of strap.

Conveniently, said first end of the strap is passed through the slot in the end piece and the other end of the strap is passed through the slot in the buckle.

Preferably after superimposing said one portion and the main body portion of the strap, the adjacent edges of the superimposed strap portions are secured together to define a central pocket, and the method includes the step of inserting an elongate element of a connector into the pocket, superimposing the other portion of the strap over at least part of the main body portion of the strap, and securing the said other end portion of the strap to the said main body portion of the strap to embrace the elongate element.

In order that the invention may be more readily understood, and so that further features thereof may be appreciated, the invention will now be described, by way of example, with reference to the accompanying drawings in which:
FIGURE 1 is a view of a webbing strap and an end piece;
FIGURE 2 is a view of the webbing strap and end piece when secured to a seat belt buckle.
FIGURE 3 is a perspective view of an anchoring plate forming part of a seat-belt buckle arrangement in accordance with the invention,
FIGURE 4 is a diagrammatic view of a length of webbing,
FIGURE 5 is a perspective view of a connector,
FIGURE 6 is a diagrammatic view of a buckle,
FIGURE 7 is a view showing a first stage in the assembly of an example of a buckle arrangement in accordance with the invention, illustrating the anchoring plate and part of the strap,
FIGURE 8 is a view corresponding to Figure 7 showing a subsequent stage during the manufacture of the buckle arrangement showing the anchoring plate, the strap and the connector,
FIGURE 9 is a view corresponding to Figure 8 showing a further stage during the assembly of the buckle arrangement,
FIGURE 10 is a view which is a slightly schematic side illustration of the completed buckle assembly, illustrating the assembly in two alternate conditions,
FIGURE 11 is a perspective view of a connector forming part of an alternative embodiment of the present invention,
FIGURE 12 is a longitudinal sectional view through a buckle, illustrating the buckle connected to the connector illustrated in Figure 9,
FIGURE 13 is a view showing a subsequent stage in the assembly of the alternative buckle arrangement showing the anchor plate, the strap, the connector and the buckle,
FIGURE 14 is a view corresponding to Figure 13 showing a subsequent stage in the assembly of the buckle,
FIGURE 15 is a view corresponding generally to that of Figure 12, but illustrating the fully assembled buckle assembly, and

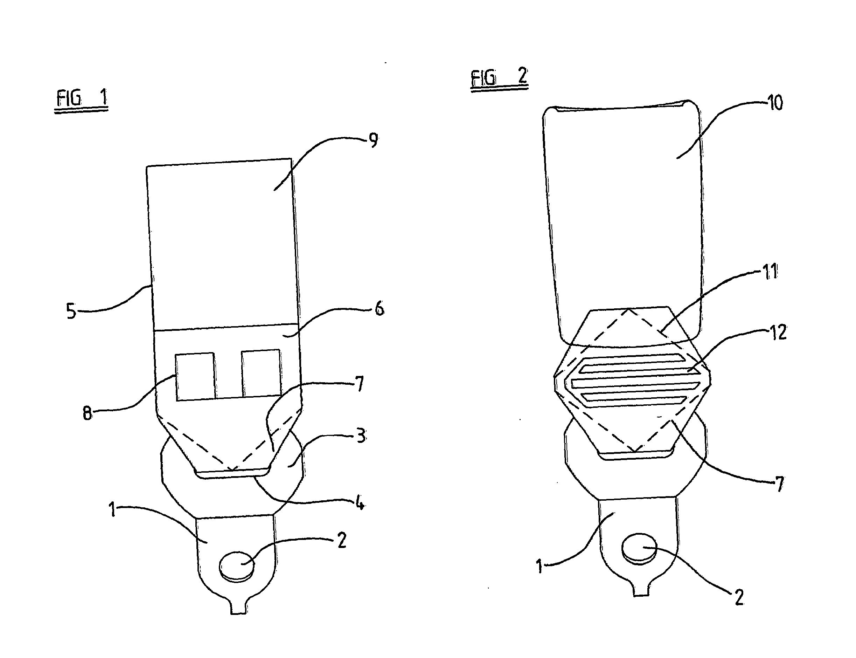

Referring initially to Figure 1 of the accompanying drawings, an end piece 1 is provided. The end piece 1 may be formed as a metal plate. Part of the metal plate defines an aperture or bolt hole 2 by means of which the end piece may be secured to an appropriate anchoring point within a vehicle. The end piece defines a further portion 3 provided with an oval slot 4. The slot 4, as will become clear from the following description, is intended to receive an end part of a webbing strap.

A webbing strap 5 is provided, of elongate form. The strap 5 has a width which is greater than the length of the slot 4.

One end 6 of the webbing strap may be passed through the slot 4, side regions of the belt being tucked inwardly, as indicated in phantom, 7, so that the relatively wide strap 5 may be accommodated within the relatively short slot 4. The end piece 6 of the strap is super-imposed over the main region of the strap adjacent the end piece 1. The super-imposed regions are stitched using a square stitching pattern 8.

Subsequently the other end 9 of the strap is passed through a slot (not shown) having a configuration similar to the slot 4, provided within a seat belt buckle 10 as shown in Figure 2.

Again, due to the relationship between the width of the strap 5 and the length of the slot in the buckle 10, edge portions of the strap 5 have to be tucked inwardly, as indicated in phantom, 11. The end piece 9 of the strap, after passing through the slot in the buckle 5, is then super-imposed over the stitching 8. Further stitching is then carried out, the stitching only being effected in the region where there are three super-imposed layers of strap, that is to say, with the stitching not being effected in the region where strap is tucked in as shown in phantom of 7 and 11. A rhombic stitching pattern 12 is utilised.

The stitching 12 is located completely between the buckle 10 and the end piece 1.

A buckle assembly is thus fabricated, the buckle assembly being very short. Thus the distance between the buckle 10 and the end piece 1 is minimal.

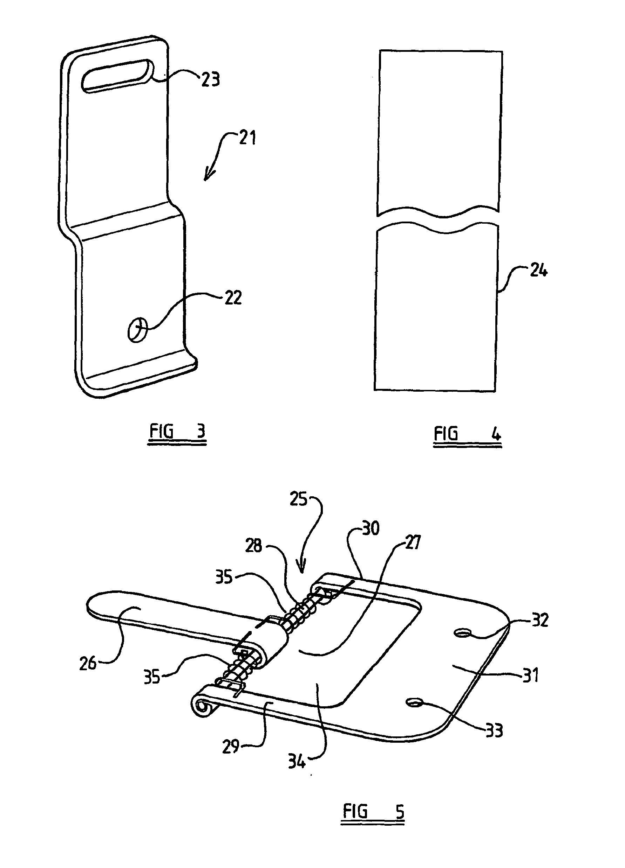

Referring now to Figures 3 to 10 of the accompanying drawings, a further embodiment of the invention will be described.

Figure 3 shows an end piece in the form of an anchor plate 21 formed of a metal strip. One end of the anchor plate 21 is provided with an anchoring aperture 22 adapted to receive a fastening bolt to secure the anchor plate to an anchoring point within a motor vehicle. The other end of the anchor plate 21 is provided with a mounting aperture in the form of an elongate slot 23 dimensioned to receive part of a webbing strap.

Figure 4 is a diagrammatic view illustrating a length of webbing strap 24.
The webbing strap is of uniform width along its length.

Figure 5 illustrates a connector unit 25. The connector unit 25 comprises an elongate element in the form of a substantially rigid finger 26 formed, for example, of metal sheet. One end of the finger 26 is provided with a socket 27, which in the embodiment illustrated is formed by folding an end part of the finger 6 to form a closed loop. The socket 27 receives a transversely extending rod 28 which is rotatable within the socket 27. The opposed ends of the rod 28 are connected to two arms 29, 30 which extend from a mounting element in the form of a mounting plate 31. The mounting plate 31 has two apertures 32, 33 formed therein to facilitate the mounting of a safety-belt buckle to the mounting plate 31 as will be described hereinafter. A relatively large slot or aperture 34 is formed defined between the plate 31, the arms 29, 30 and the rod 28. As will be described below, the mounting plate 11 is to be made fast with a buckle, so that the slot 34 is a slot present on the complete buckle dimensioned to receive the strap 24.

Two resilient biasing elements in the form of biasing springs 35 are provided which serve to bias the mounting plate 31 to a predetermined angular orientation relative to the finger 26. In the illustrated embodiment, each spring 35 comprises a helical spring which surrounds the rod 28. Each spring 35 is provided with a terminally extending portion at each end thereof, one extending portion of each spring engaging the finger 26, and the other extending portion of each spring engaging the arms 29, 30. Other forms of biasing spring may be utilised.

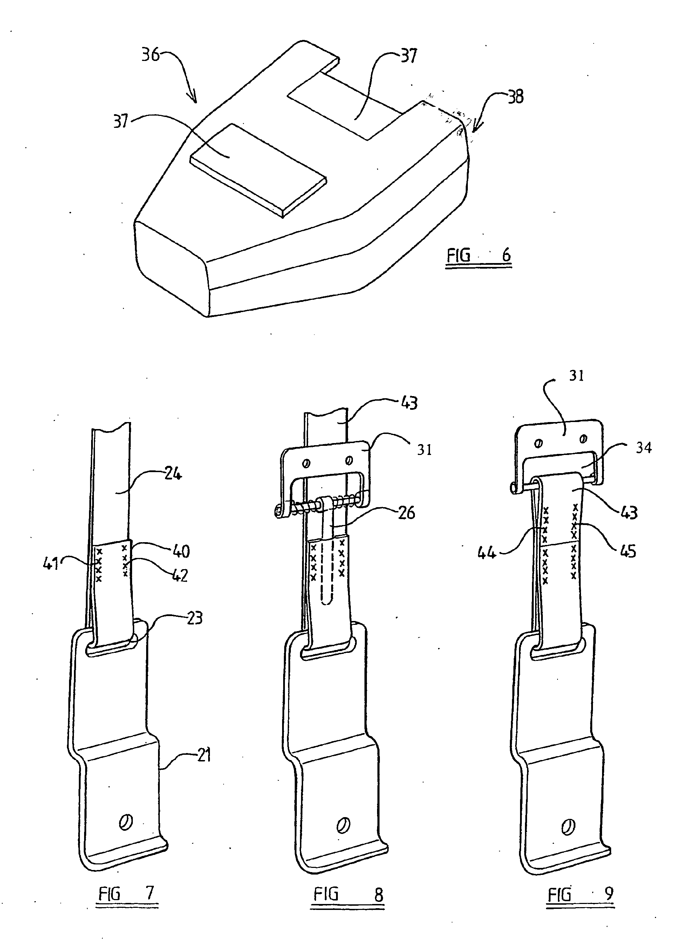

Turning now to Figure 6, a buckle 36 is illustrated. The buckle 36 has a housing 37 which defines, at one end, a slot 38 (which is not visible in Figure 6) by means of which a tongue may be inserted into the buckle 36. The buckle 36 includes a depressable button 37 which may be depressed to release the tongue. The buckle 36 may be of a conventional design. The buckle, as will become clear from the following description is intended to be mounted on the above-described mounting plate 31.

Figure 5 illustrates an initial stage in the assembly of a buckle assembly in accordance with the present invention. Initially, a first end 40 of the webbing strap 24 is passed through the elongate slot 23 provided on the anchor plate 21, after which the end 40 of the webbing strap is moved to lie adjacent the main body part of the webbing strap 24. The first end 40 of the webbing strap is then secured to the main body part of the strap by means of two lines of stitching 41, 42 adjacent the super-imposed side edges of the strap 24. Thus the stitching defines a central recess or ''pocket'' defined between the first end part 40 of the strap 24 and the main body part of the strap 24, in the area located between the two lines of stitching.

Subsequently the finger 26 of the mounting unit 25 is inserted into the pocket between the two lines of stitching so that the mounting plate 31 lies over part of the strap 24, as shown in Figure 8.

Subsequently, as shown in Figure 9, the other second end part 43 of the webbing strap 24 is threaded around the rod 28 and the springs 35 of the connector unit 25 and through the aperture 34 defined between the mounting plate 31, the arms 29, 30 and the rod 28. The second end part 43 of the webbing strap is then located to overlie part of the main portion of the strap, and also part of the already stitched first end part 40 of the strap. Further stitching 44, 45 is used to secure the second end part 43 of the strap in position, some of the stitching 44, 45 passing only through the second end part 43 of the strap and the main part of the strap 24, and some of the stitching 44, 45 passing through the second end part 43 of the strap, the first end part 40 of the strap and the main body of the strap: The stitching serves to embrace the finger 26 within the sewn strap 24. The mounting plate 31 projects beyond the end of the stitched strap.

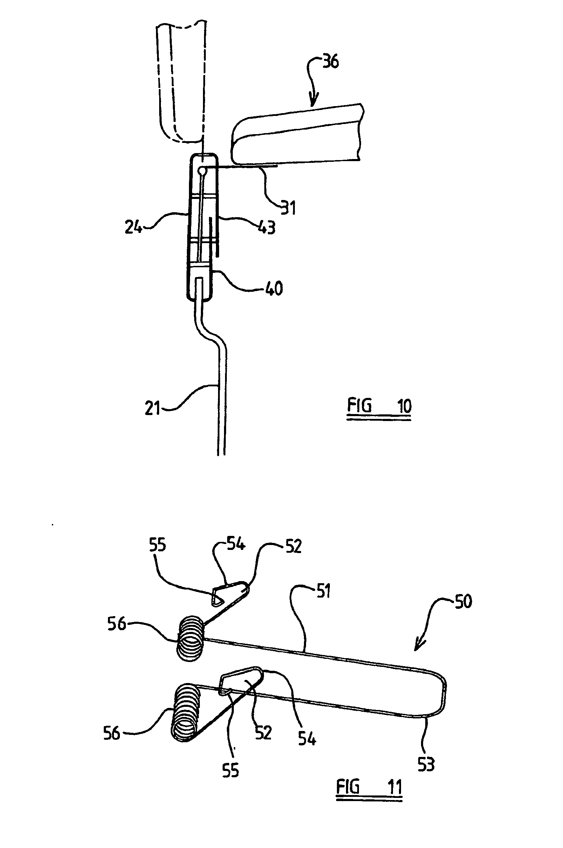

The mounted plate 31 may be mounted to the rest of the buckle 36 in the manner shown in Figure 10 using rivets or the like passing through the apertures 32 and 33 in the mounting plate 31 which engage corresponding apertures formed in the housing 37 of the buckle. In Figure 10 the location of the strap 24 and the location of the stitching is shown diagrammatically to facilitate an understanding of the location of the relevant portions of the strap 24. However, it can be seen that the strap 24 passes through the slot 34 present on the completed buckle 36.

The biasing springs 35 serve to bias the mounting plate 31 towards an initial position in which the mounting plate 31 is substantially perpendicular to the axis of the finger 26. Thus the buckle 36 initially has the position shown in solid lines in Figure 10 in which the axis of the buckle 36 is substantially perpendicular to the axis of the finger 26. However, the buckle 36 can be moved, against the bias of the spring 35 to the alternate position shown in phantom in Figure 10, in which the buckle 36 is generally in alignment with the finger 26, extending substantially upwardly above the finger 26.

It is to be appreciated that a buckle assembly of the type described with reference to Figures 3 to 10 may be of particular use for mounting on the rear seat of a motor vehicle. The anchor plate 21 will pass through a gap provided at the back of the squab of the seat and beneath the back-rest of the seat, so that an appropriate bolt may pass through the anchoring aperture 22 to engage with an anchoring point formed on the body of the vehicle located beneath and behind the rear seat. The anchor plate 21 will extend part-way up through the gap between the squab and the back-rest of the seat, and the webbing strap 24, effectively reinforced by the finger 26, will extend up from the anchor plate 21 to a position adjacent the top of the squab of the rear seat. The buckle 36 will initially lie in a substantially vertical position in which the buckle is unobtrusive, and will not impede a passenger attempting to slide across the rear seat to a central position in the rear seat. For example, the buckle 36 could be initially received within a recess provided in the back-rest of the rear seat. However, the buckle is held ready for use and is easily accessible. When the buckle 36 is to be used, the buckle is grasped and is pulled upwardly, causing the rod 28 to pivot within the socket 27, against the bias the springs 35, until the buckle 36 is substantially in the position shown in phantom in Figure 10. A tongue of a safety-belt may then easily be located within the buckle. When the buckle is no longer in use, the spring-bias provided by the springs 35 will return the buckle to the initial unobtrusive position shown in solid lines in Figure 10.

Turning now to consider Figures 11 to 16, a buckle assembly in accordance with an alternative embodiment of the present invention will now be described.

The alternative buckle assembly again comprises an anchor plate 21 and strap 24 substantially identical to those illustrated in Figures 3 and 4. However, as will be clear from Figures 11 to 16, the connector 50 of the alternative arrangement differs significantly from the connector 25 of the arrangement illustrated in Figures 3 to 10. The connector 50 illustrated in Figure 11 is fabricated from a single length of resiliently deformable metal wire 51. The length of metal wire 51 is illustrated as having been bent and deformed into a configuration which defines a pair of mounting elements 52 and an elongate element 53. Each mounting element 52 takes the form of a loop or hook of wire 54 terminating with an inwardly-turned free end 55 of the wire 51. The loop 54 of each mounting element 52 extends to a respective helically-wound length of wire 56, from which the wire 51 is formed into an elongate loop defining the elongate element 53. As illustrated in Figure 11, the two helically-wound lengths of wire 56 extend inwardly from the respective loops 54 such that the elongate element 53 is located between the two mounting elements 52.

As will therefore be appreciated, the connector 50 illustrated in Figure 11 is configured such that the two mounting elements 52 are formed integrally with the elongate element 53, which is in contrast to the connector 25 illustrated in Figure 5, in which the mounting element 50 is connected to a separate elongate element 24.

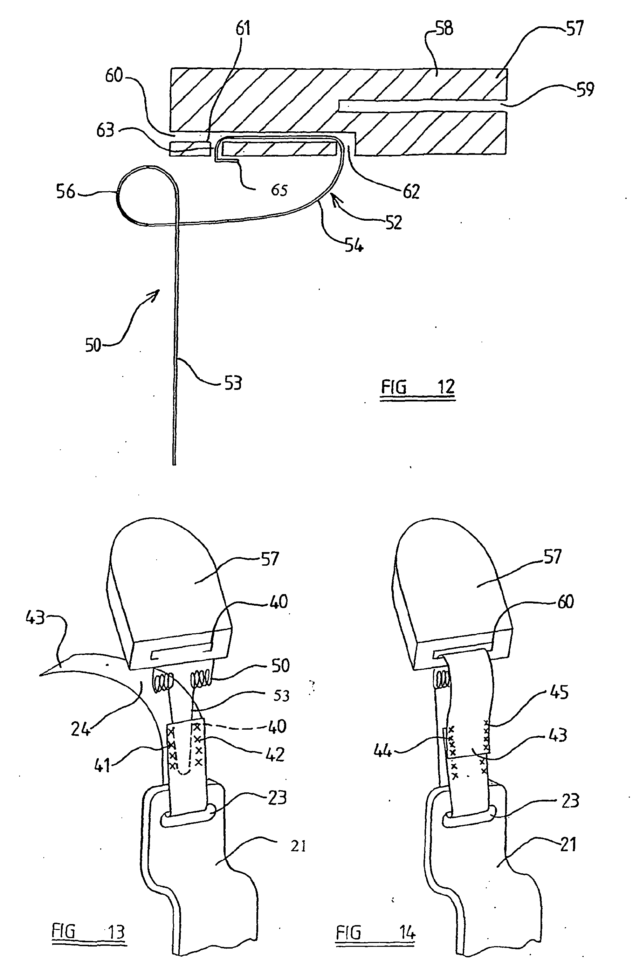

The helically-wound lengths of wire 56 serve generally the same purpose as the helical springs 35 of the connector 25 illustrated in Figure 5, in that each helically-wound length of wire 56 provides a degree of resilient bias between the mounting elements 52 and the elongate element 53, whilst permitting pivotal movement of the elongate element 53 about a notional axis relative to the mounting elements 52, against said bias. In its relaxed state (illustrated most clearly in Figure 12), the connector 50 is configured such that the mounting elements 52 extend substantially perpendicularly with respect to the elongate element 53.

Figure 12 also illustrates, in longitudinal section, the buckle 57 of this alternative arrangement. The buckle 57 again comprises a housing 58 which defines, at one end, a slot 59 by means of which a tongue may be inserted into the buckle 57. The buckle 57 again includes a depressable button (not shown) which may be depressed to release the tongue.

Additionally, the housing 58 of the buckle 57 of this arrangement is provided with a slot or end 60 at the opposite end to the tongue-receiving slot 59, the slot 60 providing access to a longitudinal channel 61 which extends toward first under-surface-slot 62 provided transversely in the underside of the housing 58. At a position between the first under-surface-slot 62 and the end of the housing 58 opposite to the tongue-receiving slot 59, there is provided a second transverse under-surface-slot 63 in the under-surface of the housing 58, the second slot 63 also communicating with the channel 61.

As also illustrated in Figure 12, the slots 62, 63 provided in the under-surface of the housing 58, together with the length of channel 61 therebetween, allow connection of the buckle 57 to the connector 50. The wire loops 50 of each mounting element 52 extend into the channel 61 through the first under-surface-slot 62, and extend along the channel 61 to exit the channel 61 through the second under-surface-slot 63, such that the inwardly-directed terminal ends 65 of the wire 61 bear against the under-surface of the housing 58 to retain the mounting element 52 in position.

Figure 13 illustrates a subsequent stage in the assembly of the alternative buckle assembly, which follows a stage of assembly substantially identical to that illustrated in Figure 7, in which a first end 40 of the webbing strap 24 is passed through the elongate slot 23 provided on the anchor plate 21, after which the end 40 of the webbing strap is moved to lie adjacent to the main body part of the webbing strap 24, and is secured to the main body part of the webbing strap 24 by means of two lines of stitching 41, 42 adjacent the super-imposed side edges of the strap 24. Figure 13 illustrates insertion of the elongate loop 53 of the connector 50 (which is already connected to the buckle 57) into the pocket defined between the two lines of stitching 40, 41 so that the connector 50 and the buckle 57 lie over part of the strap 24.

Subsequently, as shown in Figure 14, the other second end 43 of the webbing strap 24 is threaded through the channel 61 via the first under-surface-slot 62, so as to exit the housing 58 of the buckle 57 through the end slot 60. The end part 43 of the webbing strap 24 is then located to overlie part of the main portion of the strap, and also part of the already stitched first end part 40 of the strap. Further stitching 44, 45 is again used to secure the second end part of the strap 43 in position, with some of the stitching 44, 45 passing only through the second end 43 of the strap and the main part of the strap 24, whilst some of the stitching 44, 45 passes through the second end part 43 of the strap, the first end part 40 of the strap and the main body of the strap. The stitching serves to embrace the elongate loop 51 of the connector 50 within the sewn strap 24.

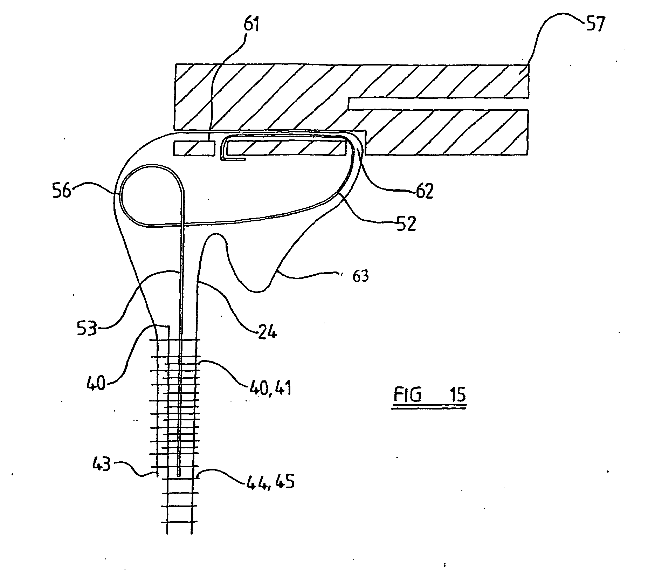

As illustrated most clearly in Figure 15, a length of slack 63 is left in the region of strap 24 extending between the first lines of stitching 40, 41 and the first under-surface-slot 62 of the channel 61.

The helically-wound lengths of wire 56 serve as biasing springs to bias the mounting elements 52 towards an initial position in which the mounting elements 52 extend substantially perpendicularly to the axis of the elongate element 53. The buckle 57 initially has the position shown in Figure 15 in which the axis of the buckle 57 is substantially perpendicular to the axis of the elongate element 53. However, the buckle 57 can be moved, against the bias of the helically-wound lengths of wire 56, to the alternate position, in which the buckle 57 is generally in alignment with the elongate element 53, extending substantially upwardly above the elongate element 53. The provision of the length of slack 63 (illustrated in Figure 15) allows unhindered movement of the buckle 57 from the position illustrated in Figure 15.

It is to be appreciated that the buckle assembly of the type described above with respect to Figures 11 to 15 is again of particular use for mounting on the rear seat of a vehicle in generally the same way as the assembly of Figures 3 to 10.

## Claims

1. A seat belt buckle assembly, the assembly having: a webbing strap (5), an end piece (1) defining a slot (4) to receive the webbing strap (5) and a buckle (10), the buckle (10) having a slot to receive the webbing strap (5); the webbing strap (5) having a first portion (6) extending through the slot (4) in the end piece (1) and secured to the main part of the webbing strap (5) and a second portion (6) passing through the slot in the buckle (10) and secured to the main part of the webbing strap (5), one said portion (6) being stitched (8) directly to the main part of the webbing strap (5) **characterised in that** the other portion (9) is stitched to the combination of said one portion (6) and the main part of the strap (5), with stitching (12) passing through the main part and the two portions of the strap; wherein the slot (4) in the end piece (1) and the slot in the buckle (10) each have a width less than the width of the strap (5), portions of the strap being tucked (7,11) in the region of each slot, the stitching (12) connecting the said other portion to the combination of the first end portion and the main region of the strap extending only through three super-imposed layers of strap; wherein the stitching (12) securing the said other portion (6) to the combination of the first end portion (6) and the main part of the strap (5) is of rhombic form.

2. A seat-belt buckle assembly according to Claim 1 further comprising a connector (25), the connector having an elongate element (26) and at least one mounting element (31) connected to or formed integrally with the elongate element for pivotal movement relative to the elongate element (26), the or each mounting element being resiliently biased to a predetermined position relative to the elongate element (26), or each mounting element (31) being mounted on the buckle (36), the said second portion of the strap (43) passing around at least part of the connector (23), where it is superimposed over the main part of the strap (24), being secured thereto so that the superimposed regions of the strap embrace the said elongate element (26).

3. An arrangement according to Claim 2, wherein said resilient bias between the or each mounting element (31) and the elongate element (26) is effective to move the buckle (36) to an initial position in which the axis of the buckle is substantially perpendicular to the axis of the elongate element (26).

4. An arrangement according to Claim 2 or Claim 3, wherein said resilient bias is effected by at least one resilient biasing element (35).

5. An arrangement according to Claim 2 or Claim 3, wherein the elongate element (53) is formed of metal sheet, one end of the elongate element (33) forming a loop (52) which receives a rod which is pivotal relative to the elongate element (53), the rod extending to and being connected to arms which extend from part of the mounting element, the mounting element being constituted by a mounting plate, there being at least one resilient biasing element engaging the elongate element and a said arm to impart said bias to the mounting element.

6. An arrangement according to Claim 5, wherein the or each said resilient biasing element (36) comprises a helical spring (56) surrounding said rod.

7. An arrangement according to any one of claims 2 to 6, wherein said connector defines the slot (39) present in the buckle.

8. An arrangement according to Claim 2 or Claim 3, wherein the or each mounting element (54) and the elongate element (53) are each formed from a single length of bent resilient wire.

9. An arrangement according to Claim 8, wherein the elongate element (53) is defined by an elongate loop of said wire extending between a pair of hook-shaped formations (32), each said hook-shaped formation (52) defining a respective mounting element for engagement with the buckle (57).

10. An arrangement according to Claim 8, wherein the region of said wire forming the elongate element (53), and the region of said wire forming the, or each, mounting element (52) are joined by a, or a respective, helically wound region of said wire, the helically wound region of wire (56) providing said resilient bias between the, or each, mounting element (52) and the elongate element (53).

11. An arrangement according to any one of Claims 8 to 10, wherein said second portion of the strap (43) passes through an aperture in the buckle (40) and around said the or each mounting element (52).

12. A method of assembling a seat belt buckle assembly having a webbing strap (1), an end piece (1) defining a slot (4) to receive the webbing strap (5) and a buckle (10) defining a slot to receive the webbing strap (5); the method comprising the steps of: passing one end portion (6) of the strap (5) through the slot in the end piece; passing the other end portion (6) of the strap (5) through the slot in the buckle; securing a first end portion (6) of the strap (5) to the main part of the strap using stitching (8) and **characterised by** subsequently securing the second end portion (6) of the strap (5) to the combination of the one end (6) of the strap (5) and the main piece of the strap (5) using stitching (12), the stitching (12) passing through the main part (5) and the two portions (6,9) of the strap; and wherein the strap (5) is wider than each of said slots, the method comprising the steps of tucking in parts of the strap (5) adjacent each slot and performing the first stitching (8) in a region where there are only two super-imposed layers of strap (5) and performing the second stitching (12) in a region where there are three super-imposed layers of strap; and wherein the stitching (12) securing the said other portion (6) to the combination of the first end portion (6) and the main part of the strap (5) is of rhombic form.

13. A method according to Claim 12 wherein said first end of the strap (6) is passed through the slot (4) in the end piece (1) and the other end of the strap (5) is passed through the slot in the buckle (10).

14. A method of any one of Claims 12 to 13 wherein after superimposing said one portion (6) and the main body portion of the strap (5), the adjacent edges of the superimposed strap portions are secured together (41,42) to define a central pocket, the method including the step of inserting an elongate element (20) of a connector (25) into the pocket, superimposing the other portion of the strap (26) over at least part of the main body portion of the strap (26), and securing the said other end portion of the strap (43) to the said main body portion of the strap (24) to embrace the elongate element (26).

## Patentansprüche

1. Sitzgurtschlossbaugruppe, wobei die Baugruppe Folgendes aufweist: ein Gewebeband (5), ein Endstück (1), das einen Schlitz (4) zum Aufnehmen des Gewebebandes (5) definiert, und ein Gurtschlosses (10), wobei das Gurtschloss (10) einen Schlitz zum Aufnehmen des Gewebebandes (5) aufweist; wobei das Gewebeband (5) einen ersten Abschnitt (6) aufweist, der durch den Schlitz (4) in dem Endstück (1) verläuft und an dem Hauptteil des Gewebebandes (5) befestigt ist, und einen zweiten Abschnitt (6), der durch den Schlitz in dem Gurtschloss (10) verläuft und an dem Hauptteil des Gewebebandes (5) befestigt ist, wobei der eine Abschnitt (6) direkt an den Hauptteil des Gewebebandes (5) genäht (8) ist, **dadurch gekennzeichnet, dass** der andere Abschnitt (9) an die Kombination aus dem einen Abschnitt (6) und dem Hauptteil des Bandes (5) genäht ist, wobei die Nähung (12) durch den Hauptteil und die beiden Abschnitte des Bandes verläuft; wobei der Schlitz (4) in dem Endstück (1) und der Schlitz in dem Gurtschloss (10) jeweils eine Breite aufweisen, die kleiner ist als die Breite des Bandes (5), wobei Abschnitte des Bandes in das Gebiet jedes Schlitzes gesteckt (7, 11) sind, wobei die Nähung (12) den anderen Abschnitt mit der Kombination aus dem ersten Endabschnitt und dem Hauptgebiet des Bandes verbindet, sich nur durch drei überlagerte Bandschichten erstreckend; wobei die Nähung (12), die den anderen Abschnitt (6) an der Kombination aus dem ersten Endabschnitt (6) und dem Hauptteil des Bandes (5) verbindet, eine Rautenform besitzt.

2. Sitzgurtschlossbaugruppe nach Anspruch 1, weiterhin umfassend ein Verbindungsstück (25), wobei das Verbindungsstück ein längliches Element (26) und mindestens ein Befestigungselement (31) aufweist, mit dem länglichen Element verbunden oder integral damit ausgebildet, zur Drehbewegung relativ zum länglichen Element (26), wobei das oder jedes Befestigungselement zu einer vorbestimmten Position relativ zum länglichen Element (26) nachgiebig vorgespannt ist oder jedes Befestigungselement (31) an dem Gurtschloss (36) montiert ist, wobei der zweite Abschnitt des Bandes (43) um mindestens einen Teil des Verbindungsstückes (23) verläuft, wo es dem Hauptteil des Bandes (24) überlagert ist, wobei es so daran befestigt, dass die überlagerten Gebiete des Bandes das längliche Element (26) umfassen.

3. Anordnung nach Anspruch 2, wobei die nachgiebige Vorspannung zwischen dem oder jedem Befestigungselement (31) und dem länglichen Element (26) das Gurtschloss (36) effektiv zu einer Anfangsposition bewegt, in der die Achse des Gurtschlosses im Wesentlichen senkrecht zur Achse des länglichen Elements (26) verläuft.

4. Anordnung nach Anspruch 2 oder 3, wobei die nachgiebige Vorspannung durch mindestens ein nachgiebiges Vorspannelement (35) bewirkt wird.

5. Anordnung nach Anspruch 2 oder 3, wobei das längliche Element (53) aus Blech geformt ist, wobei ein Ende des länglichen Elements (33) eine Schleife (52) bildet, die einen Stab aufnimmt, der sich relativ zum länglichen Element (53) drehen kann, wobei sich der Stab zu Armen erstreckt und mit diesen verbunden ist, die sich von einem Teil des Befestigungselements erstrecken, wobei das Befestigungselement durch eine Befestigungsplatte gebildet wird, wobei mindestens ein nachgiebiges Vorspannelement das längliche Element in Eingriff nimmt und ein besagter Arm dem Befestigungselement die Vorspannung verleiht.

6. Anordnung nach Anspruch 5, wobei das oder jedes nachgiebige Vorspannelement (36) eine den Stab umgebende Schraubfeder (56) umfasst.

7. Anordnung nach einem der Ansprüche 2 bis 6, wobei das Verbindungsstück den in dem Gurtschloss vorliegenden Schlitz (39) definiert.

8. Anordnung nach Anspruch 2 oder 3, wobei das oder jedes Befestigungselement (54) und das längliche Element (53) jeweils aus aus einem einzelnen Stück gebogenem nachgiebigem Draht ausgebildet sind.

9. Anordnung nach Anspruch 8, wobei das längliche Element (53) durch eine längliche Schleife des Drahts definiert wird, das sich zwischen einem Paar von hakenförmigen Formationen (32) erstreckt, wobei jede hakenförmige Formation (52) ein jeweiliges Befestigungselement zur Ineingriffnahme mit dem Gurtschloss (57) definiert.

10. Anordnung nach Anspruch 8, wobei das Gebiet des Drahts, das das längliche Element (53) bildet, und das Gebiet des Drahts, das das oder jedes Befestigungselement (52) bildet, durch ein oder ein jeweiliges schraubenförmig gewickeltes Gebiet des Drahts verbunden sind, wobei das schraubenförmig gewickelte Gebiet des Drahts (56) die nachgiebige Vorspannung zwischen dem oder jedem Befestigungselement (52) und dem länglichen Element (53) bereitstellt.

11. Anordnung nach einem der Ansprüche 8 bis 10, wobei der zweite Abschnitt des Bandes (43) durch eine Öffnung in dem Gurtschloss (40) und um das oder jedes Befestigungselement (52) verläuft.

12. Verfahren zum Zusammenbau einer Sitzgurtschlossbaugruppe, die Folgendes aufweist: ein Gewebeband (5), ein Endstück (1), das einen Schlitz (4) zum Aufnehmen des Gewebebandes (5) definiert, und ein Gurtschlosses (10), wobei das Gurtschloss (10) einen Schlitz zum Aufnehmen des Gewebebandes (5) aufweist; wobei das Verfahren die folgenden Schritte umfasst: Führen eines ersten Endabschnitts (6) des Bandes durch den Schlitz in dem Endstück; Führen des anderen Endabschnitts (6) des Bandes (5) durch den Schlitz in dem Gurtschloss; Sichern eines ersten Endabschnitts (6) des Bandes (5) an dem Hauptteil des Bandes unter Verwendung einer Nähung (8) und **gekennzeichnet durch** späteres Sichern des zweiten Endabschnitts (6) des Bandes (5) an der Kombination aus dem einen Ende (6) des Bandes (5) und dem Hauptstück des Bandes (5) unter Verwendung einer Nähung (12), wobei die Nähung (12) **durch** den Hauptteil (5) und die beiden Abschnitte (6, 9) des Bandes verläuft; und wobei das Band (5) breiter ist als jeder der Schlitze, wobei das Verfahren die folgenden Schritte umfasst: Einstecken von Teilen des Bandes (5) bei jedem Schlitz und Durchführen der ersten Nähung (8) in einem Gebiet, wo nur zwei überlagerte Schichten aus Band (5) vorliegen, und Durchführen der zweiten Nähung (12) in einem Gebiet, wo drei überlagerte Schichten aus Band vorliegen; und wobei die Nähung (12), die den anderen Abschnitt (6) an der Kombination aus dem ersten Endabschnitt (6) und dem Hauptteil des Bandes (5) verbindet, eine Rautenform besitzt.

13. Verfahren nach Anspruch 12, wobei das erste Ende des Bandes (6) durch den Schlitz (4) in dem Endstück (1) verläuft und das andere Ende des Bandes durch den Schlitz in dem Gurtschloss (10) verläuft.

14. Verfahren nach einem der Ansprüche 12 und 13, wobei nach dem Überlagern des einen Abschnitts (6) und des Hauptkörperabschnitts des Bandes (5) die benachbarten Ränder der überlagerten Bandabschnitte aneinander gesichert werden (41, 42), um eine zentrale Tasche zu definieren, wobei das Verfahren den Schritt beinhaltet, ein längliches Element (20) eines Verbindungsstücks (25) in die Tasche einzusetzen, den anderen Abschnitt des Bandes (26) mindestens einem Teil des Hauptkörperabschnitts des Bandes (26) zu überlagern und den anderen Endabschnitt des Bandes (43) an dem Hauptkörperabschnitt des Bandes (24) zu sichern, um das längliche Element (26) zu umfassen.

## Revendications

1. Ensemble de boucle de ceinture de sécurité, l'ensemble étant pourvu de : une sangle tissée (5), une pièce d'extrémité (1) délimitant une fente (4) destinée à recevoir la sangle tissée (5) et une boucle (10), la boucle (10) étant dotée d'une fente destinée à recevoir la sangle tissée (5) ; la sangle tissée (5) ayant une première section (6) s'étendant à travers la fente (4) de la pièce d'extrémité (1) et fixée à la partie principale de la sangle tissée (5) et une deuxième section (6) passant à travers la fente de la boucle (10) et fixée à la partie principale de la sangle tissée (5), une dite section (6) étant cousue (8) directement à la partie principale de la sangle tissée (5), **caractérisé en ce que** l'autre section (9) est cousue à la combinaison de ladite une section (6) et la partie principale de la sangle (5), avec la couture (12) traversant la partie principale et les deux sections de la sangle ; où la fente (4) de la pièce d'extrémité (1) et la fente de la boucle (10) ont chacune une largeur inférieure à la largeur de la sangle (5), des sections de la sangle étant repliées (7, 11) dans la zone de chaque fente, la couture (12) connectant ladite autre section à la combinaison de la première section d'extrémité et la partie principale de la sangle s'étendant uniquement à travers trois couches superposées de sangle ; où la couture (12) fixant ladite autre section (6) à la combinaison de la première section d'extrémité (6) et la partie principale de la sangle (5) est de forme rhombique.

2. Ensemble de boucle de ceinture de sécurité conforme à la revendication 1, comprenant en outre un connecteur (25), le connecteur étant doté d'un élément allongé (26) et d'au moins un élément de montage (31) connecté ou intégré à l'élément allongé pour pivoter par rapport à l'élément allongé (26), le ou chaque élément de montage étant rappelé élastiquement vers une position prédéterminée par rapport à l'élément allongé (26), ou chaque élément allongé (31) étant monté sur la boucle (36), ladite deuxième section de la sangle (43) passant autour d'au moins une partie du connecteur (23), où il est superposé sur la partie principale de la sangle (24), y étant fixé de manière à ce que les sections superposées de la sangle tiennent embrassé ledit élément allongé (26).

3. Agencement conforme à la revendication 2, où ledit rappel élastique entre le ou chaque élément de montage (31) et l'élément allongé (26) sert à déplacer la boucle (36) jusqu'à une position initiale où l'axe de la boucle est sensiblement perpendiculaire à l'axe de l'élément allongé (26).

4. Agencement conforme à la revendication 2 ou la revendication 3, ou ledit rappel élastique est assuré par au moins un élément de rappel élastique (35).

5. Agencement conforme à la revendication 2 ou la revendication 3, où l'élément allongé (53) est fabriqué en feuille de métal, une extrémité de l'élément allongé (33) formant une boucle (52) qui reçoit une tringle pivotante par rapport à l'élément allongé (53), la tringle s'étendant jusqu'à et étant connectée à des bras qui s'étendent depuis une partie de l'élément de montage, l'élément de montage étant constitué d'une plaque de montage, au moins un élément de rappel élastique engageant l'élément allongé et un dit bras pour conférer ledit rappel à l'élément de montage.

6. Agencement conforme à la revendication 5, où le ou chaque élément de rappel élastique (36) comporte un ressort hélicoïdal (56) entourant ladite tringle.

7. Agencement conforme à une quelconque des revendications 2 à 6, où ledit connecteur délimite la fente (39) présente dans la boucle.

8. Agencement conforme à la revendication 2 ou la revendication 3, où le ou chaque élément de montage (54) et l'élément allongé (53) sont chacun fabriqués d'une seule longueur de fil élastique coudé.

9. Agencement conforme à la revendication 8, où l'élément allongé (53) est délimité par une boucle allongée dudit fil s'étendant entre une paire de formations en forme de crochet (32), chaque dite formation en forme de crochet (52) délimitant un élément de montage respectif pour engagement avec la boucle (57).

10. Agencement conforme à la revendication 8, où la zone dudit fil formant l'élément allongé (53), et la zone dudit fil formant le, ou chaque, élément de montage (52) sont reliées par une zone, ou une zone respective, dudit fil enroulé de manière hélicoïdale, la zone de fil enroulé de manière hélicoïdale (56) assurant ledit rappel élastique entre le, ou chaque, élément de montage (52) et l'élément allongé (53).

11. Agencement conforme à une quelconque des revendications 8 à 10, où ladite deuxième section de la sangle (43) passe à travers une ouverture dans la boucle (40) et autour dudit le ou chaque élément de montage (52).

12. Procédé d'assemblage d'un ensemble de boucle pour ceinture de sécurité muni d'une sangle tissée (1), une pièce d'extrémité (1) délimitant une fente (4) destinée à recevoir la sangle tissée (5) et une boucle (10) délimitant une fente destinée à recevoir la sangle tissée (5) ; le procédé comportant les étapes suivantes : passer une section d'extrémité (6) de la sangle (5) à travers la fente de la pièce d'extrémité ; passer l'autre section d'extrémité (6) de la sangle (5) à travers la fente de la boucle; fixer une première section d'extrémité (6) de la sangle (5) à la partie principale de la sangle par une couture (8) et **caractérisé par** le fait de fixer par la suite la deuxième section d'extrémité (6) de la sangle (5) à la combinaison de l'extrémité (6) de la sangle (5) et la partie principale de la sangle (5) par une couture (12), la couture (12) traversant la partie principale (5) et les deux sections (6, 9) de la sangle ; et où la sangle (5) est plus large que chacune des deux dites fentes, le procédé comportant les étapes suivantes : replier des parties de la boucle (5) en position adjacente à chaque fente et exécuter la première couture (8) dans une zone où il y a seulement deux couches superposées de sangle (5) et exécuter la deuxième couture (12) dans une zone où il y a trois couches superposées de sangle ; et où la couture (12) fixant ladite autre section (6) à la combinaison de la première section d'extrémité (6) et la partie principale de la sangle (5) est de forme rhombique.

13. Procédé conforme à la revendication 12 où on fait passer ladite première extrémité de la sangle (6) à travers la fente (4) de la pièce d'extrémité (1) et l'autre extrémité de la sangle (5) à travers la fente de la boucle (10).

14. Procédé conforme à une quelconque des revendications 12 à 13 où, après avoir superposé ladite une section (6) et la partie principale de la sangle (5), on fixe l'un à l'autre les bords adjacents des sections de sangle superposées (41,42) pour délimiter une poche centrale, le procédé comportant les étapes suivantes : insérer un élément allongé (20) d'un connecteur (25) dans la poche, superposer l'autre section de la sangle (26) sur au moins une partie de la partie principale de la sangle (26), et fixer ladite autre section d'extrémité de la sangle (43) à ladite partie principale de la sangle (24) de manière à tenir embrassé l'élément allongé (26).
